# EUROPEAN PATENT APPLICATION

(11) **EP 4 641 805 A1**
(43) Date of publication of application: **29.10.2025**
(21) Application number: 23921622.9
(22) Date of filing: 13.02.2023
(51) Int. Cl.: H01M 50/409, H01M 50/403

(54) **SEPARATOR, PREPARATION METHOD THEREFOR, AND SECONDARY BATTERY AND ELECTRIC DEVICE RELATED THERETO**

(71) Applicant: Contemporary Amperex Technology (Hong Kong) Limited, Central, Central And Western District (HK)
(72) Inventor: LIU, Feng, Ningde, Fujian 352100 (CN); FAN, Yulei, Ningde, Fujian 352100 (CN); GUAN, Wenhao, Ningde, Fujian 352100 (CN); LING, Yuexia, Ningde, Fujian 352100 (CN); ZHONG, Wei, Ningde, Fujian 352100 (CN); GE, Xiaoming, Ningde, Fujian 352100 (CN); OUYANG, Chuying, Ningde, Fujian 352100 (CN)
(74) Representative: Kraus & Lederer PartGmbB
(86) International application number: PCT/CN2023/075585
(87) International publication number: WO 2024/168448

(57) **Abstract**

The present application provides a separator, a method for preparing the same, and a secondary battery and an electrical device related thereto. The separator includes a porous base material and ferroelectric ceramic particles, the porous base material includes a first region and a second region disposed in a thickness direction of the separator, and the ferroelectric ceramic particles are dispersed in the first region. The separator of the present application has a relatively good performance. When the separator is used to a secondary battery, the safety performance and cycle performance of the secondary battery are improved.

## Description

### TECHNICAL FIELD

The present application relates to the field of batteries, specifically to a separator, a method for preparing the same, and a secondary battery and an electrical device related thereto.

### BACKGROUND

Secondary batteries have the characteristics of high capacity, long service life, and the like, and therefore, have been widely used in electronic devices, such as mobile phones, notebook computers, electric carts, electric vehicles, electric airplanes, electric ships, electric toy cars, electric toy ships, electric toy planes, and electric tools.

With increasingly wide use of batteries, the requirements for the performance of secondary batteries are increasingly stringent. In order to improve the performance of secondary batteries, separators in the secondary batteries are usually optimized and improved. However, current separators have relatively good performance, and the safety and cycle performance of secondary batteries are improved when current separators are applied to the secondary batteries.

### SUMMARY

In view of the above subject matter, the objective of the present application is to provide a separator, a method for preparing the same, and a secondary battery and an electrical device related thereto.

A first aspect of the present application provides a separator, including a porous base material and ferroelectric ceramic particles, where the porous base material includes a first region and a second region disposed in a thickness direction of the separator, and the ferroelectric ceramic particles are dispersed in the first region.

Therefore, when the separator of the present application is applied to a secondary battery, on the one hand, there is an internal electric field between a positive electrode plate and a negative electrode plate in the charging process of the secondary battery. Under the action of the internal electric field, the centers of positive and negative charges inside the ferroelectric particles may be excited to shift, to generate the reverse electric field that can polarize the separator to promote the accelerated movement of active ions, thereby reducing the concentration gradient of active ions near a negative electrode current collector, namely, reducing the concentration of active ions on the side of the separator close to the negative electrode plate, and reducing the risk of precipitation of active ions into dendrites. On the other hand, the active ions precipitate as metals, the local volume expansion during metal deposition leads to stress concentration, and the first region where the ferroelectric ceramic particles are located may deform, so that instantaneous positive and negative charges are produced on two sides of the separator in the thickness direction. Because the active ions carry positive charges, the electric field formed by the positive charges accumulated on one side of the separator repels the continued deposition of the active ions at the stress concentration position, while the electric field formed by the negative charges accumulated on the other side (close to the negative electrode plate) attracts the active ions to deposit at that position, thereby changing the direction of dendrite growth. For example, the active ions are lithium ions. The lithium ions accumulate charges when deposited on the surface of the negative electrode plate, resulting in a local charge concentration to form a local strong electric field, which makes it easier for the lithium ions in that region to form protruding dendrites. After the ferroelectric ceramic particles are subjected to an external electric field, a reverse electric field is formed to terminate further concentration of charges, thereby alleviating uneven distribution of charges and suppressing the formation of dendrites. In other words, reducing the risk of precipitation of lithium ions can reduce the risk of formation of lithium dendrites, thereby reducing the risk of short circuits inside the secondary battery due to the puncture of the separator by dendrites and thus improving the safety performance of the secondary battery.

In some embodiments, the ferroelectric ceramic particles have a dielectric constant ε, and the ferroelectric ceramic particles satisfy: 200 ≤ ε ≤ 3640.

Therefore, the relatively high dielectric constant of the ferroelectric ceramic particles in the present application is conducive to exerting the ferroelectric effect of the ferroelectric ceramic particles, and can improve the electric field distribution at the separator to a greater extent, thereby improving metal deposition morphology, reducing the risk of short-circuits between positive and negative electrodes caused by dendrite formation, and improving the safety performance of the secondary battery.

In some embodiments, the ferroelectric ceramic particles include one or more of perovskite structure compounds, tungsten bronze structure compounds, pyrochlore structure compounds, and layered bismuth oxide structure compounds. The above materials have excellent ferroelectric effects, and can spontaneously polarize under the action of an external electric field to generate a reverse electric field that can increase the migration rate of active ions near the negative electrode plate and reduce the risk of dendrite formation, thereby reducing the risk of short circuits inside the secondary battery due to the puncture of the separator by dendrites and further improving the safety performance of the secondary battery.

In some embodiments, the perovskite structure compounds include one or more of titanates, ferrites, and niobates.

In some embodiments, the titanates include one or more of barium titanate BaTiO₃, lead titanate PbTiO₃, and strontium titanate SrTiO₃.

In some embodiments, the ferrites include one or more of bismuth ferrite BiFeO₃, lanthanum ferrite LaFeO₃, and strontium ferrite SrFeO₃.

In some embodiments, the tungsten bronze structure compounds include one or more of lead niobate PbNb₂O₆, barium sodium niobate Ba₂NaNb₅O₁₅, strontium barium niobate Sr₁₋ₓBaₓNb₂O₆, bismuth lead niobate PbBiNb₅O₁₅, and titanium lead niobate Pb₃TiNb₄O₁₅, where 0 < x < 1.

In some embodiments, the pyrochlore structure compounds include one or more of cadmium pyrotantalate Cd₂Ta₂O₇, lead pyroniobate Pb₂Nb₂O₇, cadmium pyroniobate Cd₂Nb₂O₇, gadolinium pyroniobate Gd₂Nb₂O₇, and bismuth ruthenate Bi₂Ru₂O₇.

In some embodiments, the layered bismuth oxide structure compounds include one or more of bismuth titanate Bi₄Ti₃O₁₂, lead bismuth niobate PbBi₂Nb₂O₉, titanium bismuth niobate Bi₃TiNbO₉, and bismuth strontium titanate SrBi₄Ti₄O₁₅.

In some embodiments, the ferroelectric ceramic particles have a volume distribution particle size Dv50 of D in µm, and the ferroelectric ceramic particles satisfy: 0.05 ≤ D ≤ 5.00; optionally, 0.05 ≤ D ≤ 1.00.

Therefore, when the volume distribution particle size of the ferroelectric ceramic particles in the present application satisfies the above ranges, the ferroelectric ceramic particles are less likely to block pores of the porous base material, thereby improving the overall air permeability of the separator, ensuring ion conduction channels, and improving the capacity and cycle performance of the secondary battery; the particle size of ferroelectric ceramic particles is not too large, and the ferroelectric ceramic particles are more evenly dispersed in the first region. The distribution density of ferroelectric ceramic particles can be relatively high, which is conducive to better exerting the ferroelectric effect. It is beneficial for reducing the thickness of the first region, which can reduce the overall thickness of the separator. The ferroelectric ceramic particles can have relatively high distribution density, which is conducive to better exerting the ferroelectric effect and further improving the capacity and cycle performance of the secondary battery.

In some embodiments, the porous base material includes one or more of polyolefin polymers, polyamides, polyesters, polysulfones, and polyether sulfones; and optionally, the polyolefin polymers include one or more of polyethylene, polyvinylidene fluoride, polytetrafluoroethylene, polyvinyl chloride, polypropylene, and poly(1-butylene).

In some embodiments, the porous base material includes a polymer with a number average molecular weight of 5×10⁴ to 5×10⁶, optionally 1×10⁵ to 1×10⁶. The polymer with the number average molecular weight in the above ranges have relatively high viscosity and relatively good adhesion with the ferroelectric ceramic particles, making it difficult for the ferroelectric ceramic particles to detach from the porous base material.

In some embodiments, the second region has a thickness of H₁ in µm; the first region has a thickness of H₂ in µm; the separator satisfies: 0.8 ≤ H₂/2H₁ ≤ 3; optionally, 0.8 ≤ H₂/2H₁ ≤ 2.

In some embodiments, 2.5 ≤ H₁ ≤ 4.5; and/or 3.5 ≤ H₂ ≤ 7.5.

Therefore, when the thicknesses of the second region and the first region in the present application satisfy the above ranges, the distribution thickness of the ferroelectric ceramic particles can be increased, thereby enhancing the ferroelectric effect of the ferroelectric ceramic particles.

In some embodiments, the separator has a thickness of H in µm, and the separator satisfies: 5 ≤ H ≤ 25; optionally, 10 ≤ H ≤ 15. The thickness of the separator within the above ranges can further enhance the mechanical properties of the separator 7.

In some embodiments, the separator has a porosity of P%, 50 ≤ P ≤ 70. The porosity of the separator within the above range is conducive to reducing ion impedance and allowing active ions to migrate smoothly, thereby facilitating capacity exertion of the secondary battery.

In some embodiments, the separator has an air permeability of MAP in s/100mL, 80 ≤ MAP ≤ 200. The air permeability of the separator within the above range is conducive to reducing ion impedance, enables active ions to migrate smoothly, and thus facilitates capacity exertion of the secondary battery.

In some embodiments, based on a total mass of the separator, a mass percentage of the ferroelectric ceramic particles is m₁%, 1 ≤ m₁ ≤ 15; and/or based on the total mass of the separator, a mass percentage of the porous base material is m₂%, 85 ≤ m₂ ≤ 99. The mass percentage of the ferroelectric ceramic particles within the above range can improve the overall ferroelectric effect of the separator, thereby further improving the safety and cycle performance of the secondary battery.

In some embodiments, the porous base material comprises the second regions in a number of 2, and the first region is located between the second regions.

Therefore, the ferroelectric ceramic particles are dispersed in the first region, and the second regions are provided on two sides of the first region, that is, the ferroelectric ceramic particles are enveloped by the second regions. When the separator is applied to the secondary battery, the ferroelectric ceramic particles are less prone to contact with positive and/or negative electrode active materials, thereby reducing the risk of side reactions between the ferroelectric ceramic particles and the positive electrode active materials and/or negative electrode active materials, reducing the loss of the positive electrode active materials and/or negative electrode active materials, and ensuring the capacity and cycle performance of the secondary battery.

A second aspect of the present application further provides a method for preparing a separator, including: providing a supporting mixed material including a first polymer; mixing a second polymer and ferroelectric ceramic particles as a functional mixed material; thermally treating the supporting mixed material to melt the first polymer and form a supporting melt; thermally treating the functional mixed material to melt the second polymer and form a functional melt; and disposing the supporting melt on at least one side of the functional melt, co-extruding the supporting melt and the functional melt, and then stretching and solidifying to form the separator.

In some embodiments, the supporting mixed material further includes a pore-forming agent; and/or the functional mixed material further includes a pore-forming agent.

A third aspect of the present application further provides a secondary battery, including the separator according to any one of embodiments of the first aspect of the present application or the separator obtained by the preparation method according to any one of embodiments of the second aspect of the present application.

A fourth aspect of the present application further provides an electrical device, including the secondary battery in the embodiments of the third aspect of the present application.

### BRIEF DESCRIPTION OF THE DRAWINGS

In order to explain the technical solutions of the embodiments of the present application more clearly, the accompanying drawings required for use in the embodiments of the present application will be briefly introduced below. Apparently, the accompanying drawings described below show only some embodiments of the present application. Those of ordinary skill in the art can derive other drawings based on the accompanying drawings without any creative effort.
Fig. 1 is a schematic view of an embodiment of a separator of the present application.
Fig. 2 is a schematic view of an embodiment of a secondary battery of the present application.
Fig. 3 is an exploded view of the embodiment of the secondary battery in Fig. 2.
Fig. 4 is a schematic view of an embodiment of a battery module of the present application.
Fig. 5 is a schematic view of an embodiment of a battery pack of the present application.
Fig. 6 is an exploded view of the embodiment of the battery pack shown in Fig. 5.
Fig. 7 is a schematic view of an embodiment of an electrical device including the secondary battery of the present application as a power supply.
Fig. 8 is a first scanning electron microscopy image of the separator in Example 1 of the present application.
Fig. 9 is a second scanning electron microscopy image of the separator in Example 1 of the present application.
Fig. 10 is a scanning electron microscopy image of a separator in Comparative Example 2 of the present application.

The drawings are not drawn to actual scale.

Reference numerals are described as follows:
1. Battery pack; 2. Upper case body; 3. Lower case body; 4. Battery module;
5. Secondary battery; 51. Housing; 52. Electrode assembly;
53. Cover plate;
6. Electrical device;
7. Separator; 70. Porous base material; 71. Second region; 72. First region; 73. Ferroelectric ceramic particles.

### DETAILED DESCRIPTION

The following provides detailed explanations of embodiments of a separator, a method for preparing the same, and a secondary battery and an electrical device related thereto of the present application. However, unnecessary detailed explanations are omitted. For example, detailed explanations of well-known matters and repeated explanations of actually identical structures are omitted. This is to prevent the following explanations from becoming unnecessarily lengthy and to facilitate understanding of those skilled in the art. In addition, the accompanying drawings and the following explanations are provided for those skilled in the art to fully understand the present application and are not intended to limit the subject matter described in the claims.

The "range" disclosed in the present application is defined in the form of a lower limit and an upper limit. A given range is defined by selecting a lower limit and an upper limit, and the selected lower limit and upper limit define the boundaries of a particular range. The range defined in this way can include or exclude end values, and can be combined arbitrarily, that is, any lower limit can be combined with any upper limit to form a range. For example, if ranges of 60-120 and 80-110 are listed for a specific parameter, it is understood that a range of 60-110 and 80-120 is also contemplated. In addition, if minimum range values 1 and 2 are listed, and if maximum range values 3, 4 and 5 are listed, the following ranges can all be contemplated: 1-3, 1-4, 1-5, 2-3, 2-4 and 2-5. In the present application, unless otherwise specified, the numerical range "a-b" represents an abbreviation of any combination of real numbers between a and b, where both a and b are real numbers. For example, the numerical range "0-5" represents all real numbers "0-5" listed herein, and "0-5" is only an abbreviation of a group of these numerical values. In addition, when a parameter is expressed as an integer ≥ 2, it is equivalent to disclosing that the parameter is, for example, an integer 2, 3, 4, 5, 6, 7, 8, 9, 10, 11, 12, etc.

Unless otherwise specified, all the embodiments and optional embodiments of the present application may be combined with each other to form new technical solutions. Unless otherwise specified, all the technical features and optional features of the present application may be combined with each other to form new technical solutions.

Unless otherwise specified, all the steps of the present application may be performed sequentially or randomly, but preferably performed sequentially. For example, the method includes steps (a) and (b), which represents that the method may include steps (a) and (b) performed sequentially, or may include steps (b) and (a) performed sequentially. For example, the method may further include step (c), which represents that step (c) may be added to the method in any order, for example, the method may include steps (a), (b) and (c), or steps (a), (c) and (b), or steps (c), (a) and (b).

Unless otherwise specified, the expressions "comprise" and "include" mentioned in the present application mean that it is drafted in an open-ended mode or closed-ended mode. For example, the expression "comprise" and "include" may comprise or include other components that are not listed, or comprise or include only the listed components.

Unless otherwise specified, in the present application, the term "or" is inclusive. For example, the phrase "A or B" represents "A, B, or both A and B". More specifically, any of the following conditions satisfies the condition "A or B": A is true (or exists) and B is false (or does not exist); A is false (or does not exist) and B is true (or exists); or both A and B are true (or exist).

In the present application, the terms "a plurality of" and "a plurality of types of" refer to two or more and two or more types, respectively.

Unless otherwise specified, terms used in the present application have well-known meanings generally understood by those skilled in the art.

Unless otherwise specified, values of parameters mentioned in the present application can be measured by various commonly used testing methods in the art, for example, measured by testing methods provided in the embodiments of the present application.

Generally, a secondary battery includes an electrode assembly and an electrolyte. The electrode assembly includes a positive electrode plate, a negative electrode plate, and a separator. The separator is disposed between the positive electrode plate and the negative electrode plate, mainly prevents short circuits between the positive electrode plate and the negative electrode plate while allowing active ions to freely pass through and form a circuit.

With the application and promotion of secondary batteries, people's requirements for the safety performance of secondary electricity are increasingly high. In the charging and discharging process of secondary batteries, active ions such as lithium ions and sodium ions are prone to forming dendrites on the surface of the negative electrode plate. The growth of dendrites may puncture the separator to short-circuit the positive electrode plate and the negative electrode plate, thereby posing safety risks to the secondary battery.

The inventors have found that improving the performance of the separator is an effective measure to improve the safety performance of the secondary battery. In related technologies, a functional coating is disposed on the base material of the separator to improve the mechanical properties of the separator, thereby reducing the risk of puncturing the separator by dendrites. However, the inventors have found by further research that there is large interface impedance between the functional coating and the base material, which is not conducive to the migration of active ions between the positive electrode plate and the negative electrode plate; and the functional coating may come into direct contact with positive and negative electrodes, so that side reactions may occur between the functional coating and the positive and negative electrodes, resulting in the loss of positive and negative electrode active materials to reduce the capacity and cycle performance of the secondary battery. Therefore, it is difficult to improve both safety performance and cycle performance of the secondary battery at the same time.

In view of the above problems, the inventors provide a separator, the structure and material of which are improved by dispersing a ferroelectric ceramic material in the base material, where the ferroelectric ceramic material in the separator can regulate the electric field inside the secondary battery and reduce the risk of dendrite formation caused by the precipitation of active ions, and under the protective effect of the base material, the ferroelectric ceramic material is less prone to side reactions with the positive and/or negative electrode active materials, thereby improving the safety performance, dynamic performance, capacity performance, and cycle performance of the secondary battery using the separator.

### Separator

In a first aspect, the present application provides a separator.

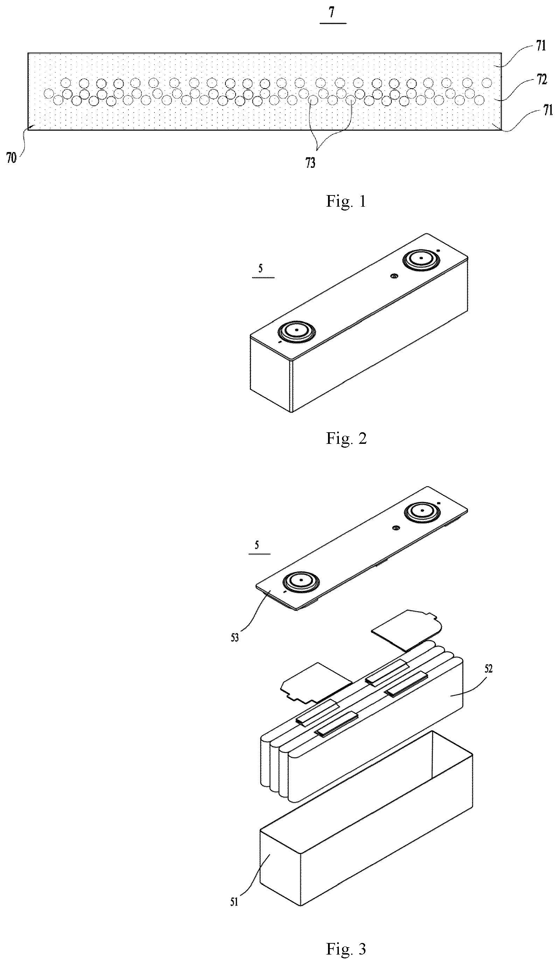

As shown in Fig. 1, the separator 7 includes a porous base material 70 and ferroelectric ceramic particles 73. The porous base material 70 includes a first region 72 and a second region 71 disposed in a thickness direction of the separator 7, and the ferroelectric ceramic particles 73 are dispersed in the first region 72. In an embodiment of the present application, the second region 71 is disposed on at least one side of the first region 72, that is, the second region 71 may be disposed on one side of the first region 72 or on two sides of the first region 72.

Although the mechanism is not yet clear, the inventors have found that the separator 7 of the present application can improve the safety performance, dynamic performance, capacity performance, and cycle performance of a secondary battery when applied to the secondary battery.

The inventors speculate that the mechanism of action is as follows:
Firstly, the ferroelectric ceramic particles 73 have a ferroelectric effect, and can thus spontaneously polarize under the action of an external electric field to generate a reverse electric field that can increase the migration rate of active ions near the negative electrode plate and reduce the risk of dendrite formation, thereby reducing the risk of short circuits inside the secondary battery due to the puncture of the separator 7 by dendrites and improving the safety performance of the secondary battery.

Specifically, on the one hand, when the separator 7 is applied to the secondary battery, there is an internal electric field between the positive electrode plate and the negative electrode plate in the charging process of the secondary battery. Under the action of the internal electric field, the centers of positive and negative charges inside the ferroelectric particles may be excited to shift, to generate the reverse electric field that can polarize the separator 7 to promote the accelerated movement of active ions, thereby reducing the concentration gradient of active ions near the negative electrode current collector and reducing the risk of precipitation of active ions into dendrites. On the other hand, the active ions precipitate as metals, the local volume expansion during metal deposition leads to stress concentration, and the first region 72 where the ferroelectric ceramic particles 73 are located may deform, so that instantaneous positive and negative charges are produced on two sides of the separator 7 in the thickness direction. Because the active ions carry positive charges, the electric field formed by the positive charges accumulated on one side of the separator 7 repels continued deposition of the active ions at the stress concentration position, while the electric field formed by the negative charges accumulated on the other side (close to the negative electrode plate) attracts the active ions to deposit at that position, thereby changing the direction of dendrite growth. For example, the active ions are lithium ions. The lithium ions accumulate charges when deposited on the surface of the negative electrode plate, resulting in a local charge concentration to form a local strong electric field, which makes it easier for the lithium ions in that region to form protruding dendrites. After the ferroelectric ceramic particles are subjected to an external electric field, a reverse electric field is formed to terminate further concentration of charges, thereby alleviating uneven distribution of charges and suppressing the formation of dendrites. In other words, reducing the risk of precipitation of lithium ions can reduce the risk of formation of lithium dendrites, thereby reducing the risk of short circuits inside the secondary battery due to the puncture of the separator 7 by dendrites and improving the safety performance of the secondary battery.

The ferroelectric ceramic particles 73 can effectively decrease current density and can still regulate dendrite growth in secondary battery applications at high current densities.

Secondly, the ferroelectric ceramic particles 73 have good heat resistance and mechanical strength. When dispersed in the first region 72, the ferroelectric ceramic particles can improve the overall heat resistance and mechanical properties of the separator 7. The improvement on the mechanical properties of the separator 7 is beneficial to further reducing the risk of short-circuiting between the positive and negative electrode plates due to the puncture of the separator 7 by dendrites, and can further improve the safety performance of the secondary battery. In the charging and discharging process of the secondary battery, the improvement on the heat resistance of the separator 7 is beneficial to ensuring the stability of the performance of the separator 7, thereby improving the cycle performance of the secondary battery.

Thirdly, as a whole layer structure, the porous base material 70 is divided into a plurality of regions internally, but there may be no distinct interface between the adjacent regions. Specifically, the porous base material 70 includes a first region 72 and a second region 71, that is, the porous base material 70 includes a second region 71 and a first region 72 disposed sequentially in the thickness direction, main materials of the two adjacent regions may be the same or similar, and there may be no distinct interface between the two adjacent regions. Apparently, the main materials of the two adjacent regions may be different. This makes the impedance between the first region 72 and the second region 71 relatively small, which is conducive to the transmission of active ions in the separator 7 and improves the dynamic performance of the secondary battery.

Fourthly, the ferroelectric ceramic particles 73 in the porous base material 70 have good hydrophilicity and good affinity with strongly polar electrolytes, which can enhance the liquid retention capacity of the separator 7 and further improve the performance of the secondary battery.

In some embodiments, the porous base material 70 comprises the second regions 71 in a number of 2, and the first region 72 is located between the second regions 71, that is, the porous base material 70 includes a second region 71, a first region 72, and a second region 71 disposed sequentially.

The ferroelectric ceramic particles 73 are dispersed in the first region 72, and the second regions 71 are provided on two sides of the first region 72, that is, the ferroelectric ceramic particles 73 are enveloped by the second regions 71. When the separator 7 is applied to the secondary battery, the ferroelectric ceramic particles 73 are less prone to contact with positive and/or negative electrode active materials, thereby reducing the risk of side reactions between the ferroelectric ceramic particles 73 and the positive and/or negative electrode active materials, reducing the loss of the positive and/or negative electrode active materials, and ensuring the capacity and cycle performance of the secondary battery.

In some embodiments, the ferroelectric ceramic particles 73 have a dielectric constant ε, and the ferroelectric ceramic particles 73 satisfy: 200 ≤ ε ≤ 3640.

The relatively high dielectric constant of the ferroelectric ceramic particles 73 is conducive to exerting the ferroelectric effect of the ferroelectric ceramic particles 73, and can improve the electric field distribution at the separator 7 to a greater extent, thereby improving metal deposition morphology, reducing the risk of short-circuits between positive and negative electrodes caused by dendrite formation, and enhancing the safety performance of the secondary battery. For example, the dielectric constant of the ferroelectric ceramic particles 73 may be 200, 300, 500, 1000, 2000, 3000, 3640, or a range of any two of the above values.

In some embodiments, the ferroelectric ceramic particles include one or more of perovskite structure compounds, tungsten bronze structure compounds, pyrochlore structure compounds, and layered bismuth oxide structure compounds. The above materials have excellent ferroelectric effects, and can spontaneously polarize under the action of an external electric field to generate a reverse electric field that can increase the migration rate of active ions near the negative electrode plate and reduce the risk of dendrite formation, thereby reducing the risk of short circuits inside the secondary battery due to the puncture of the separator 7 by dendrites and further improving the safety performance of the secondary battery.

Optionally, the perovskite structure compounds include tetragonal/orthogonal/rhombic perovskite structure compounds, such as one or more of titanates, ferrites, and niobates. The perovskite structure compounds refer to ABX₃ type compounds with perovskite structures, where A represents a cation with a large radius, B represents a cation with a small radius, and X represents an anion; BX₆ forms a regular octahedron, BX₆s are connected by a common vertex X to form a three-dimensional skeleton, and A is embedded in octahedral gaps to stabilize the crystal structure.

For example, the titanates include one or more of barium titanate BaTiO₃, lead titanate PbTiO₃, and strontium titanate SrTiO₃. The barium titanate is a tetragonal barium titanate.

For example, the ferrites include one or more of bismuth ferrite BiFeO₃, lanthanum ferrite LaFeO₃, and strontium ferrite SrFeO₃.

Optionally, the tungsten bronze structure compounds include one or more of lead niobate PbNb₂O₆, barium sodium niobate Ba₂NaNb₅O₁₅, strontium barium niobate Sr₁₋ₓBaₓNb₂O₆, bismuth lead niobate PbBiNb₅O₁₅, and titanium lead niobate Pb₃TiNb₄O₁₅, where 0 < x < 1. The tungsten bronze structure compounds have a crystal structure of KₓW₁₋ₓO₃, which is composed of WO₆ octahedra as a unit and O as a vertex connecting octahedras. This type of ceramic materials has a bronze-like surface and characteristics of strong spontaneous polarization, high dielectric constant, etc.

Optionally, the pyrochlore structure compounds include one or more of cadmium pyrotantalate Cd₂Ta₂O₇, lead pyroniobate Pb₂Nb₂O₇, cadmium pyroniobate Cd₂Nb₂O₇, gadolinium pyroniobate Gd₂Nb₂O₇, and bismuth ruthenate Bi₂Ru₂O₇. The general formula of the pyrochlore structure is A₂B₂O₇, and may also be represented by A₂O·B₂O₆. In fact, the pyrochlore structure is an interconnected network structure including A₂O' tetrahedra of a chalcopyrite-like structure and B₂O₆ octahedra of a tungsten bronze sharing an angular apex.

Optionally, the layered bismuth oxide structure compounds include one or more of bismuth titanate Bi₄Ti₃O₁₂, lead bismuth niobate PbBi₂Nb₂O₉, titanium bismuth niobate Bi₃TiNbO₉, and bismuth strontium titanate SrBi₄Ti₄O₁₅. The layered bismuth oxide structure compounds are illustrated using bismuth titanate Bi₄Ti₃O₁₂ as an example. This compound is composed of alternating perovskite structures of a Bi₂O₂)²⁺ layer, Bi (located at the A site), and Ti (located at the B site), and has a good ferroelectric effect.

In some embodiments, the ferroelectric ceramic particles 73 have a volume distribution particle size Dv50 of D in µm, and the ferroelectric ceramic particles 73 satisfy: 0.05 ≤ D ≤ 5.00; and optionally, 0.05 ≤ D ≤ 1.00.

When the volume distribution particle size of the ferroelectric ceramic particles 73 satisfies the above range, the ferroelectric ceramic particles 73 are less likely to block pores of the porous base material 70, thereby improving the overall air permeability of the separator 7, ensuring ion conduction channels, and enhancing the capacity and cycle performance of the secondary battery; the ferroelectric ceramic particles 73 with a small particle size are dispersed in the first region 72 more evenly, and the relatively high distribution density of the ferroelectric ceramic particles 73 is conducive to better exerting the ferroelectric effect; the thickness of the first region 72 can be reduced, which can reduce the overall thickness of the separator 7; and the relatively high distribution density of the ferroelectric ceramic particles 73 is conducive to better exerting the ferroelectric effect and further improving the capacity and cycle performance of the secondary battery.

In the present application, the volume distribution particle size Dv50 of the material has a well-known meaning in the art and can be measured using instruments and methods known in the art, for example, tested with reference to GB/T 19077-2016 particle size distribution laser diffraction methods using a laser particle size analyzer (such as Master Size 3000).

In some embodiments, the porous base material 70 may include one or more of polyolefin polymers, polyamides (PA), polyesters (PLY), polysulfones (PS), and polyether sulfones (PES).

Optionally, the polyolefin polymers include one or more of polyethylene PE, polyvinylidene fluoride PVDF, polytetrafluoroethylene PTFE, polyvinyl chloride PVC, polypropylene PP, and poly(1-butylene). For example, the polyethylene may include medium density polyethylene MDPE, high density polyethylene HDPE, ultra-high density polyethylene UHMWPE, etc.

In some embodiments, a number average molecular weight of the polymer included in the porous base material 70 is 5×10⁴ to 5×10⁶, optionally 1×10⁵ to 1×10⁶.

The polymer with the number average molecular weight in the above ranges have high viscosity and good adhesion with the ferroelectric ceramic particles 73, making it difficult for the ferroelectric ceramic particles 73 to detach from the porous base material 70. For example, the number average molecular weight of the polymer may be 5×10⁴, 8×10⁴, 1×10⁵, 3×10⁵, 5×10⁵, 1×10⁶, 5×10⁶, or a range of any two of the above values.

For example, the polyethylene is medium density polyethylene MDPE, the number average molecular weight of which is 1.5×10⁵ to 2.0×10⁵.

For example, the polyethylene is high density polyethylene HDPE, the number average molecular weight of which is 2.0×10⁵ to 4.0×10⁵.

For example, the polyethylene is ultra-high polyethylene UHMWPE, the number average molecular weight of which is 1.0×10⁶ to 5.0×10⁶.

In the present application, the number average molecular weight of the polymer is a commonly known meaning in the art and can be tested using devices or methods known in the art. Specifically, the number average molecular weight of the polymer can be tested by gel permeation chromatography (GPC). Specifically, the number average molecular weight is tested using a GPC1515 instrument from Waters Corporation in the United States, where a sample with a concentration of 4 mg/ml is dissolved in tetrahydrofuran for at least 12 hours, filtered, and tested at a temperature of 25°C and a flow rate of 1 ml/min.

The inventors have found by further research that, when the separator 7 still satisfies at least one of the following conditions, the heat resistance, air permeability, and other properties of the separator 7 can be further improved.

In some embodiments, the second region(s) 71 has/have a thickness of H₁ in µm; the first region 72 has a thickness of H₂ in µm, and the separator 7 satisfies: 0.8 ≤ H₂/2H₁ ≤ 3.0.

When the thicknesses of the second region 71 and the first region 72 satisfy the above range, the distribution thickness of the ferroelectric ceramic particles 73 can be increased, thereby enhancing the ferroelectric effect of the ferroelectric ceramic particles 73. Optionally, 0.8 ≤ H₂/2H₁ ≤ 2. For example, H₂/2H₁ may be 0.8, 1, 1.2, 1.5, 1.8, 2.0, 2.2, 2.5, 2.8, 3.0, or a range of any two of the above values.

In the present application, when the second region(s) 71 and the first region 72 may be made of different materials, and there is a small boundary between the two, and the thicknesses of the two can be tested using devices or methods known in the art. Specifically, the thicknesses of the second region(s) 71 and the first region 72 can be measured directly using tomography, as follows: 1. Sample preparation: a. Cutting the separator 7 into 6 mm * 6 mm with ceramic scissors, and sticking the sample to a sample stage coated with paraffin, where the sample slightly extends beyond (< 1 mm) the edge of the sample stage; b. Spraying the sample with gold for 60 seconds; c. Polishing at a given voltage and time for polishing (100 minutes at 7.5 KV for the negative electrode plate with a thickness of 150 µm); 2. Morphological analysis: Using a scanning electron microscope, moving the sample to left and right by about 50 times until the image is clear, marking the thickness of the second region(s) 71 or the first region 72 at 12 positions respectively, and taking an average value to obtain the thickness of the second region(s) 71 or the first region 72.

In some embodiments, the separator 7 has a thickness of H in µm, and the separator 7 satisfies: 5 ≤ H ≤ 25.

The thickness of the separator 7 within the above range can further enhance the mechanical properties of the separator 7. Optionally, 10 ≤ H ≤ 15. For example, the thickness of the separator 7 may be 5 µm, 8 µm, 10 µm, 12 µm, 15 µm, 18 µm, 20 µm, 22 µm, 25 µm, or a range of any two of the above values.

In some embodiments, the separator 7 has a porosity of P%, 50 ≤ P ≤ 70.

The porosity of the separator 7 within the above range is conducive to reducing ion impedance and allowing active ions to migrate smoothly, thereby facilitating capacity utilization of the secondary battery. For example, the porosity of the separator 7 may be 50%, 52%, 55%, 58%, 60%, 62%, 65%, 68%, 70%, or a range of any two of the above values.

In the present application, the porosity P% of the separator 7 has a well-known meaning in the art and can be tested using devices or methods known in the art, such as tested with reference to the standard GB/T 36363-2018.

In some embodiments, the separator 7 has an air permeability of MAP in s/100mL, 80 ≤ MAP ≤ 200.

The air permeability of the separator 7 within the above range is conducive to reducing ion impedance, enables active ions to migrate smoothly, and thus facilitates capacity utilization of the secondary battery. For example, the air permeability of the separator 7 may be 80s/100mL, 100s/100mL, 120s/100mL, 150s/100mL, 180s/100mL, 200s/100mL, or a range of any two of the above values.

In the present application, the air permeability of the separator 7 has a well-known meaning in the art and can be tested using devices or methods known in the art, for example, tested with reference to the standard GB/T 36363-2018.

In some embodiments, based on a total mass of the separator 7, a mass percentage of the ferroelectric ceramic particles 73 is m₁%, 1 ≤ m₁ ≤ 15.

The mass percentage of the ferroelectric ceramic particles 73 within the above range can improve the overall ferroelectric effect of the separator 7, thereby further improving the safety and cycle performance of the secondary battery. For example, the mass percentage of the ferroelectric ceramic particles 73 may be 1%, 2%, 5%, 6%, 8%, 10%, 12%, 15%, or a range of any two of the above values.

In some embodiments, based on the total mass of the separator 7, a mass percentage of the porous base material 70 is m₂%, 85 ≤ m₂ ≤ 99.

The mass percentage of the porous base material 70 within the above range can improve the overall mechanical strength of the separator 7. For example, the mass percentage of the porous base material 70 may be 85%, 88%, 89%, 90%, 92%, 94%, 95%, 96%, 98%, 99%, or a range of any two of the above values.

In the present application, the mass percentages of the ferroelectric ceramic particles 73 and the porous base material 70 can be tested using devices and methods known in the art. Specifically, a 4cm * 4cm separator is cut and weighed, dissolved in nitric acid, and tested by inductively coupled plasma mass spectrometry (ICP-MS), with reference to HJ 766-2015 inductively coupled plasma mass spectrometry for determination of solid waste metal elements, to obtain mass percentages of Ba and Ti elements, then the mass percentage of the ferroelectric ceramic particles 73 is calculated, and the mass percentage of the porous base material 70 is further calculated.

In some embodiments, the separator 7 further includes functional additives, such as an antioxidant. For example, the antioxidant is used for delaying the aging phenomenon that occurs under the action of light, heat, and oxygen, and may be one or a combination of two or more selected from tris(2,4-di-tert-butylphenyl)phosphite, triphenyl phosphite, β-(3,5-di-tert-butyl-4-hydroxyphenyl)propionic acid octadecanol ester, and [tetra β-(3,5-di-tert-butyl-4-hydroxyphenyl)propionic acid]pentaerythritol ester. When the antioxidant is a combination of two or more of the above, their ratio may be any ratio.

In some embodiments, a filler may be dispersed in the porous base material 70. Furthermore, the filler may include other inorganic particles besides the ferroelectric ceramic particles 73.

In some embodiments, the decomposition temperature of the filler may be above 200°C, which enables the filler to have good thermal stability and difficult decomposition, thereby further enhancing the heat resistance of the separator 7.

The inorganic particles have high thermal stability and are not easily decomposed. Optionally, the inorganic particles include at least one of inorganic particles that have ion conductivity but do not store ions and inorganic particles that can undergo electrochemical reactions.

The inorganic particles that have ion conductivity but do not store ions include at least one of Li₃PO₄, lithium titanium phosphate Liₓ₁Ti_{y1}(PO₄)₃, lithium titanium aluminum phosphate Liₓ₂Al_{y2}Ti_{z1}(PO₄)₃, (LiAlTiP)ₓ₃O_{y3} glass, lithium lanthanum titanate Liₓ₄La_{y4}TiO₃, lithium germanium thiophosphate Liₓ₅Ge_{y5}P_{z2}S_{w}, lithium nitride Liₓ₆N_{y6}, SiS₂ glass Liₓ₇Si_{y7}S_{z3}, and P₂S₅ glass Liₓ₈P_{y8}S_{z4}, where 0 < x1 < 2, 0 < y1 < 3, 0 < x2 < 2, 0 < y2 < 1, 0 < z1 < 3, 0 < x3 < 4, 0 < y3 < 13, 0 < x4 < 2, 0 < y4 < 3, 0 < x5 < 4, 0 < y5 < 1, 0 < z2 < 1, 0 < w < 5, 0 < x6 < 4, 0 < y6 < 2, 0 < x7 < 3, 0 < y7 < 2, 0 < z3 < 4, 0 < x8 < 3, 0 < y8 < 3, and 0 < z4 < 7. This can further enhance the ion transport characteristic of the separator 7.

Optionally, the inorganic particles that can undergo electrochemical reactions include at least one of lithium-containing transition metal oxides, lithium-containing phosphates, carbon-based materials, silicon-based materials, tin-based materials, and lithium titanium compounds.

In the present application, the thermal shrinkage rate, tensile strength, and porosity of the separator 7 have well-known meanings in the art and can be measured using methods known in the art, for example, tested with reference to the standard GB/T 36363-2018.

### Method for preparing a separator

In a second aspect, the present application further provides a method for preparing the separator 7. The method includes: S100, a mixing stage; S200, a thermal treatment stage; S300, a production stage of the separator 7. The method uses co-extrusion to produce the separator 7 in any one of embodiments of the first aspect of the present application. The produced separator 7 is of a whole layer structure, ferroelectric ceramic particles 73 are dispersed in the first region 72 of the whole layer structure, and the ferroelectric ceramic particles 73 can exert a ferroelectric effect to improve the safety and cycle performance of a secondary battery. Meanwhile, the porous base material 70 can protect the ferroelectric ceramic particles 73, thereby reducing the risk of side reactions between the ferroelectric ceramic particles 73 and active materials, and improving the capacity exertion performance and cycle performance of the secondary battery.

S100 may include S110, a dry mixing stage and S120, a wet mixing stage.

S110 specifically includes: providing a supporting mixed material including a first polymer. A second polymer and ferroelectric ceramic particles 73 are mixed as a functional mixed material. The supporting mixed material is mainly used for producing the second region(s) 71 of the porous base material 70, and the second polymer in the functional mixed material is mainly used for producing the first region 72 of the porous base material 70. The first polymer and the second polymer may be the same or similar polymer or different polymers.

Optionally, the supporting mixed material may further include functional additives, such as an antioxidant and a nucleating agent.

For example, the antioxidant is used for delaying the aging phenomenon that occurs under the action of light, heat, and oxygen, and may be one or a combination of two or more selected from tris(2,4-di-tert-butylphenyl)phosphite, triphenyl phosphite, β-(3,5-di-tert-butyl-4-hydroxyphenyl)propionic acid octadecanol ester, and [tetra β-(3,5-di-tert-butyl-4-hydroxyphenyl)propionic acid]pentaerythritol ester. When the antioxidant is a combination of two or more of the above, their ratio may be any ratio.

For example, the nucleating agent is used for inducing crystal nucleation, and may be one or a combination of two or more selected from terephthalic acid, azelaic acid, adipic acid, and dibenzylidene sorbitol. When the nucleating agent is a combination of two or more of the above, their ratio may be any ratio.

As a specific example, S110 includes: dispersing and mixing medium molecular weight polyethylene, a nucleating agent such as terephthalic acid, and an antioxidant such as tris(2,4-di-tert-butylphenyl)phosphite in a high mixing machine according to a set ratio to form a supporting mixed material; and dispersing and mixing ferroelectric ceramic particles 73 and high molecular weight polyethylene in the high mixing machine to form a functional mixed material.

In S120, in some embodiments, the supporting mixed material further includes a pore-forming agent, that is, the pore-forming agent and the first polymer are mixed uniformly and stood or stirred at a temperature of 25°C to 100°C for 6 hours to 72 hours to form the supporting mixed material. Optionally, the stirring speed may be 700 rpm to 1200 rpm.

The functional mixed material further includes a pore-forming agent, that is, the pore-forming agent, the second polymer, and the ferroelectric ceramic particles 73 are mixed uniformly and stood or stirred at a temperature of 25°C to 100°C for 6 hours to 72 hours to form the functional mixed material.

Optionally, the raw materials in the supporting mixed material and the functional mixed material may be mixed by a blending device, such as a multi-screw extruder, a single-axis eccentric rotor extruder, or a double-axis eccentric rotor extruder.

In some embodiments, the pore-forming agent may include high molecular pore-forming agents and/or small molecular pore-forming agents.

The small molecular pore-forming agents are molecular compounds having a molecular weight of less than 1000 daltons, especially less than 400 daltons. Compared with the small molecular pore-forming agents, the high molecular pore-forming agents are compounds having a larger molecular weight, such as greater than 2000 daltons or even up to million daltons.

For example, the high molecular pore-forming agents may include one or more of polyvinyl pyrrolidone PVP, polyethylene glycol PEG, and polyvinyl alcohol PVA.

For example, the small molecular pore-forming agents may include one or more of mineral oil, kerosene, decalin, sodium chloride, potassium carbonate, lithium chloride, ADC foaming agent (azodicarbonamide), and water.

The pore-forming agent is extracted from the porous base material 70 in subsequent steps, and can form pores of the porous base material 70, so that the porous base material 70 has a porous structure.

In some embodiments, a mass percentage of the first polymer is 91% to 96% based on a total mass of the supporting mixed material.

In some embodiments, a mass percentage of the nucleating agent is 0.1% to 5% based on the total mass of the supporting mixed material.

In some embodiments, a mass percentage of the antioxidant is 0.2% to 0.4% based on the total mass of the supporting mixed material.

In some embodiments, a mass percentage of the pore-forming agent in the supporting mixed material is 0.1% to 5% based on the total mass of the supporting mixed material.

In some embodiments, a mass percentage of the second polymer is 60% to 90% based on a total mass of the functional mixed material.

In some embodiments, a mass percentage of the ferroelectric ceramic particles 73 is 10% to 40% based on the total mass of the functional mixed material.

In some embodiments, a mass percentage of the pore-forming agent in the functional mixed material is 0.1% to 5% based on the total mass of the functional mixed material.

S200 specifically includes: thermally treating the supporting mixed material to melt the first polymer and form a supporting melt; and thermally treating the functional mixed material to melt the second polymer and form a functional melt.

Melting the supporting mixed material and the functional mixed material separately is conducive to subsequent plasticizing transport and solidification molding.

The temperature for thermally treating the supporting mixed material is greater than or equal to the melting point of the first polymer, such as 150°C to 250°C.

The temperature for thermally treating the functional mixed material is greater than or equal to the melting point of the second polymer, such as 150°C to 250°C.

S300 specifically includes: disposing the supporting melt on at least one side of the functional melt, co-extruding the supporting melt and the functional melt, and then stretching and solidifying to form the separator 7.

The supporting melt and the functional melt can be extruded by a co-extrusion die head to form a multi-layer composite gel film, which includes the supporting melt, the functional melt, and the supporting melt in its thickness direction.

Optionally, a stretching stage may be further included after the multi-layer composite gel film is formed. Specifically, the multi-layer composite gel film may be stretched by asynchronous biaxial stretching (that is, first transverse stretching and then longitudinal stretching, or first longitudinal stretching and then transverse stretching) or synchronous biaxial stretching (that is, synchronous transverse stretching and longitudinal stretching).

The stretching device is a stretching machine, such as an asynchronous biaxial stretching machine or a synchronous biaxial stretching film machine. The transverse stretching ratio of the film is 3 to 10 times, the longitudinal stretching ratio is 3 to 10 times, and the stretching temperature is 90°C to 120°C.

After stretching, heat setting treatment is carried out. During the heat setting treatment, the supporting melt and the functional melt are solidified. The corresponding region after the supporting melt is solidified is mainly the second region(s) 71, and the corresponding region after the functional melt is solidified is mainly the first region 72. When the first polymer and the second polymer are the same or similar materials, the main materials of the supporting melt and the functional melt are basically the same, and the separator 7 formed by the solidification of the two has no distinct interface. When the first polymer and the second polymer are different materials, a part of the first polymer in the supporting melt may enter the functional melt during the heat setting treatment, a part of the second polymer in the functional melt may enter the supporting melt during the heat setting treatment, and the interface between the functional melt and the supporting melt may not be distinct after solidification, that is, the separator 7 is of a whole layer structure, and there may be no distinct interface inside.

The temperature for heat setting is 100°C to 140°C, the heat setting pressure is 5 MPa to 20 MPa, and the heat setting time is 5 minutes to 120 minutes.

**In** some embodiments, the method further includes S400, a pore forming stage. Specifically, the above separator 7 is sequentially extracted with an organic solvent and dried, so that the separator 7 has a porous structure.

The solubility of the pore-forming agent in the organic solvent is relatively higher. After the pore-forming agent is extracted with the organic solvent, the space originally occupied by the pore-forming agent in the separator 7 forms a pore structure, which is beneficial to improving the air permeability and ion conductivity of the separator 7.

The organic solvent may include one or more of n-hexane, acetone, chloroform, water, and ethanol.

The extraction time may be 1 minute to 20 minutes, the drying temperature is 60°C to 120°C, and the drying time is 2 hours to 8 hours.

### Secondary battery

**In** a third aspect, the present application further provides a secondary battery.

The secondary battery, also known as a rechargeable battery or a storage battery, refers to a battery that can activate an active material by means of charging after discharge and continue to be used. Generally, the secondary battery includes an electrode assembly and an electrolyte. The electrode assembly includes a positive electrode plate, a negative electrode plate, and a separator 7. The separator 7 is disposed between the positive electrode plate and the negative electrode plate, mainly plays a role in preventing short circuits between a positive electrode and a negative electrode, and can allow active ions to pass through.

The present application does not specifically limit the type of the secondary battery. For example, the secondary battery may be a lithium-ion battery or a sodium-ion battery. Specifically, the secondary battery may be a lithium-ion secondary battery.

The secondary battery described in the present application includes the separator 7 in the first aspect of the present application or the separator 7 prepared by the method in the second aspect of the present application, where the separator 7 is disposed between the positive electrode plate and the negative electrode plate.

### [Positive electrode plate]

In some embodiments, the positive electrode plate includes a positive electrode current collector and a positive electrode film layer disposed on at least one surface of the positive electrode current collector and including a positive electrode active material. For example, the positive electrode current collector has two surfaces opposite in its thickness direction, and the positive electrode film layer is disposed on either or both of the two opposite surfaces of the positive electrode current collector.

When the secondary battery of the present application is a lithium-ion battery, the positive electrode active material may include, but is not limited to, at least one of lithium-containing transition metal oxides, lithium-containing phosphates, and respective modified compounds thereof. Examples of the lithium-containing transition metal oxides may include, but are not limited to, at least one of lithium cobalt oxides, lithium nickel oxides, lithium manganese oxides, lithium nickel cobalt oxides, lithium manganese cobalt oxides, lithium nickel manganese oxides, lithium nickel cobalt manganese oxides, lithium nickel cobalt aluminum oxides, and respective modified compounds thereof. Examples of the lithium-containing phosphates may include, but are not limited to, at least one of lithium iron phosphates, lithium iron phosphate and carbon composites, lithium manganese phosphates, lithium manganese phosphate and carbon composites, lithium iron manganese phosphates, lithium iron manganese phosphate and carbon composites, and respective modified compounds thereof.

In some embodiments, in order to further increase the energy density of the secondary battery, the positive electrode active material used for the lithium-ion battery may include at least one of lithium transition metal oxides represented by a general formula LiₐNi_{b}Co_{c}M_{d}OₑA_{f} and modified compounds thereof. 0.8 ≤ a ≤ 1.2, 0.5 ≤ b <1, 0 < c < 1, 0 < d < 1, 1 ≤ e ≤ 2, 0 ≤ f ≤ 1, M includes at least one of Mn, Al, Zr, Zn, Cu, Cr, Mg, Fe, V, Ti and B, and A includes at least one of N, F, S, and Cl.

As an example, the positive electrode active material used for the lithium-ion battery may include at least one of LiCoO₂, LiNiO₂, LiMnO₂, LiMn₂O₄, LiNi_{1/3}CO_{1/3}Mn_{1/3}O₂(NCM333), LiNi_{0.5}Co_{0.2}Mn_{0.3}O₂(NCM523), LiNi_{0.6}Co_{0.2}Mn_{0.2}O₂(NCM622), LiNi_{0.8}Co_{0.1}Mn_{0.1}O₂(NCM811), LiNi_{0.85}Co_{0.15}Al_{0.05}O₂, LiFePO₄, and LiMnPO₄.

When the secondary battery of the present application is a sodium-ion battery, the positive electrode active material may include, but is not limited to, at least one of sodium-containing transition metal oxides, polyanion materials (such as phosphates, fluorophosphate, pyrophosphates, and sulfates), and Prussian blue materials.

As an example, the positive electrode active material used for the sodium-ion battery may include at least one of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, Prussian blue materials, and materials represented by a general formula XₚM'_{q}(PO₄)ᵣOₓY₃₋ₓ. In the general formula XₚM'_{q}(PO₄)ᵣOₓY₃₋ₓ, 0 < p ≤ 4, 0 < q ≤ 2, 1 ≤ r ≤ 3, and 0 ≤ x ≤ 2; X includes at least one of H⁺, Li⁺, Na⁺, K⁺, and NH₄⁺; M' is a transition metal cation, and is optionally at least one of V, Ti, Mn, Fe, Co, Ni, Cu, and Zn; Y is a halogen anion, and is optionally at least one of F, Cl, and Br.

In the present application, the modified compounds of the foregoing positive electrode active materials may be of doping modification and/or surface coating modification of the positive electrode active materials.

In some embodiments, the positive electrode film layer may further optionally include a positive electrode conductive agent. The present application does not specially limit the type of the positive electrode conductive agent. As an example, the positive electrode conductive agent includes at least one of superconducting carbon, conductive graphite, acetylene black, carbon black, Ketjen black, carbon dots, carbon nanotubes, graphene, and carbon nanofibers. In some embodiments, a mass percentage of the positive electrode conductive agent is ≤ 5% based on a total mass of the positive electrode film layer.

In some embodiments, the positive electrode film layer may further optionally include a positive electrode binder. The present application does not specially limit the type of the positive electrode binder. As an example, the positive electrode binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin. In some embodiments, a mass percentage of the positive electrode binder is ≤ 5% based on the total mass of the positive electrode film layer.

In some embodiments, the positive electrode current collector may be a metal foil or a composite current collector. An aluminum foil may be used as an example of the metal foil. The composite current collector may include a polymer material base layer and a metal material layer formed on at least one surface of the polymer material base layer. As an example, the metal material may include at least one of aluminum, aluminum alloy, nickel, nickel alloy, titanium, titanium alloy, silver, and silver alloy. As an example, the polymer material base layer may include at least one of polypropylene (PP), polyethylene terephthalate (PET), polybutylene terephthalate (PBT), polystyrene (PS), and polyethylene (PE).

The positive electrode film layer is usually formed by coating the positive electrode current collector with a positive electrode slurry, drying, and cold pressing. The positive electrode slurry is usually formed by dispersing the positive electrode active material, the optional conductive agent, the optional binder, and any other components in a solvent and stirring uniformly. The solvent may be N-methylpyrrolidone (NMP), but is not limited to this.

### [Negative electrode plate]

In some embodiments, the negative electrode plate includes a negative electrode current collector and a negative electrode film layer disposed on at least one surface of the negative electrode current collector and including a negative electrode active material. For example, the negative electrode current collector has two surfaces opposite in its thickness direction, and the negative electrode film layer is disposed on either or both of the two opposite surfaces of the negative electrode current collector.

The negative electrode active material may be a negative electrode active material commonly known in the art for secondary batteries. As an example, the negative electrode active material includes, but is not limited to, at least one of natural graphite, artificial graphite, soft carbon, hard carbon, silicon-based materials, tin-based materials, and lithium titanate. The silicon-based materials may include at least one of elemental silicon, silicon oxides, silicon-carbon composites, silicon-nitrogen composites, and silicon alloy materials. The tin-based materials may include at least one of elemental tin, tin oxides, and tin alloy materials.

In some embodiments, the negative electrode film layer may further optionally include a negative electrode conductive agent. The present application does not specially limit the type of the negative electrode conductive agent. As an example, the negative electrode conductive agent may include at least one of superconducting carbon, conductive graphite, acetylene black, carbon black, Ketjen black, carbon dots, carbon nanotubes, graphene, and carbon nanofibers. In some embodiments, a mass percentage of the negative electrode conductive agent is ≤ 5% based on a total mass of the negative electrode film layer.

In some embodiments, the negative electrode film layer may further optionally include a negative electrode binder. The present application does not specially limit the type of the negative electrode binder. As an example, the negative electrode binder may include at least one of styrene butadiene rubber (SBR), water-soluble unsaturated resin SR-1B, water-based acrylic resin (such as polyacrylic acid PAA, polymethyl methacrylate PMAA, polyacrylic acid sodium PAAS), polyacrylamide (PAM), polyvinyl alcohol (PVA), sodium alginate (SA), and carboxymethyl chitosan (CMCS). In some embodiments, a mass percentage of the negative electrode binder is ≤ 5% based on the total mass of the negative electrode film layer.

In some embodiments, the negative electrode film layer may further optionally include other additives. As an example, the other additives may include a thickener, such as carboxymethyl cellulose sodium (CMC) or a PTC thermistor material. In some embodiments, a mass percentage of the other additives is ≤ 2% based on the total mass of the negative electrode film layer.

In some embodiments, the negative electrode current collector may be a metal foil or a composite current collector. A copper foil may be used as an example of the metal foil. The composite current collector may include a polymer material base layer and a metal material layer formed on at least one surface of the polymer material base layer. As an example, the metal material may include at least one of copper, copper alloy, nickel, nickel alloy, titanium, titanium alloy, silver, and silver alloy. As an example, the polymer material base layer may include at least one of polypropylene (PP), polyethylene terephthalate (PET), polybutylene terephthalate (PBT), polystyrene (PS), and polyethylene (PE).

The negative electrode film is usually formed by coating the negative electrode current collector with a negative electrode slurry, drying, and cold pressing. The negative electrode slurry is usually formed by dispersing the negative electrode active material, the optional conductive agent, the optional binder, and other optional auxiliaries in a solvent and stirring uniformly. The solvent may be N-methylpyrrolidone (NMP) or deionized water, but is not limited to this.

The negative electrode plate does not exclude other additional functional layers besides the negative electrode coating. For example, in some embodiments, the negative electrode plate described in the present application further includes a conductive undercoat (for example, consisting of a conductive agent and a binder) sandwiched between the negative electrode current collector and the negative electrode film layer and disposed on the surface of the negative electrode current collector. In other embodiments, the negative electrode plate described in the present application further includes a protective layer covering the surface of the negative electrode coating.

### [Electrolyte]

In the charging and discharging process of the secondary battery, active ions are intercalated and deintercalated back and forth between the positive electrode plate and the negative electrode plate, and the electrolyte plays a role in conducting the active ions between the positive electrode plate and the negative electrode plate. The present application does not specially limit the type of the electrolyte, which can be selected according to actual needs.

The electrolyte includes an electrolyte salt and a solvent. The types of the electrolyte salt and the solvent are not specifically limited and can be selected according to actual needs.

When the secondary battery of the present application is a lithium-ion battery, as an example, the electrolyte salt may include, but is not limited to, at least one of lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluorooxalate (LiDFOB), lithium bis(oxalate)borate (LiBOB), lithium difluorophosphate (LiPO₂F₂), lithium difluorobisoxalate phosphate (LiDFOP), and lithium tetrafluorooxalate phosphate (LiTFOP).

When the secondary battery of the present application is a sodium-ion battery, as an example, the electrolyte salt may include, but is not limited to, at least one of sodium hexafluorophosphate (NaPF₆), sodium tetrafluoroborate (NaBF₄), sodium perchlorate (NaClO₄), sodium hexafluoroarsenate (NaAsF₆), sodium bisfluorosulfonimide (NaFSI), sodium bistrifluoromethanesulfonimide (NaTFSI), sodium trifluoromethanesulfonate (NaTFS), sodium difluorooxalate borate (NaDFOB), sodium bis(oxalate)borate (NaBOB), sodium difluorophosphate (NaPO₂F₂), sodium difluorobisoxalate phosphate (NaDFOP), and sodium tetrafluorooxalate phosphate (NaTFOP).

As an example, the solvent may include, but is not limited to, at least one of ethylene carbonate (EC), propylidene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfoyl meftyl (MSM), methyl ethyl sulfone (EMS), and ethyl sulfonyl ethane (ESE).

In some embodiments, the electrolyte may further optionally include additives. For example, the additives may include a negative electrode film-forming additive, a positive electrode film-forming additive, and additives that can improve some performances of batteries, such as an additive that improves overcharge performance of batteries, an additive that improves high-temperature performance of batteries, and an additive that improves low-temperature performance of batteries.

In some embodiments, the positive electrode plate, the separator 7, and the negative electrode plate may be wound and/or laminated into an electrode assembly.

In some embodiments, the secondary battery may include an outer package. The outer package can be used for packaging the aforementioned electrode assembly and electrolyte.

In some embodiments, the outer package of the secondary battery may be a hard housing, such as a hard plastic housing, an aluminum housing, or a steel housing. The outer package of the secondary battery may alternatively be a soft package, such as a pocket type soft package. The material of the soft package may be plastic, such as at least one of polypropylene (PP), polybutylene terephthalate (PBT), and polybutylene succinate (PBS).

The present application does not have particular limitation to the shape of the secondary battery. The secondary battery may be cylindrical, square, or in other arbitrary shape. Fig. 2 shows a secondary battery 5 with a square structure as an example.

In some embodiments, as shown in Fig. 3, the outer package may include a housing 51 and a cover plate 53. The housing 51 may include a bottom plate and side plates connected to the bottom plate, and the bottom plate and the side plates enclose an accommodating cavity. The housing 51 has an opening in communication with the accommodating cavity, and the cover plate 53 is closed to the opening to seal the accommodating cavity. The positive electrode plate, the negative electrode plate, and the separator 7 may be wound and/or laminated to form an electrode assembly 52. The electrode assembly 52 is packaged in the accommodating cavity. An electrolyte infiltrates the electrode assembly 52. The secondary battery 5 includes one or more electrode assemblies 52, which may be adjusted according to requirements.

The method for preparing the secondary battery of the present application is well known. In some embodiments, the positive electrode plate, the separator 7, the negative electrode plate, and the electrolyte may be assembled to form the secondary battery. As an example, the positive electrode plate, the separator 7, and the negative electrode plate may be wound and/or laminated to form an electrode assembly, the electrode assembly is placed in an outer package and dried, then the electrolyte is injected, and the secondary battery is obtained after vacuum packaging, standing, chemical transformation, shaping, etc.

In some embodiments of the present application, the secondary battery according to the present application may be assembled into a battery module. The battery module may include a plurality of secondary batteries, and a specific quantity may be adjusted according to the application and capacity of the battery module.

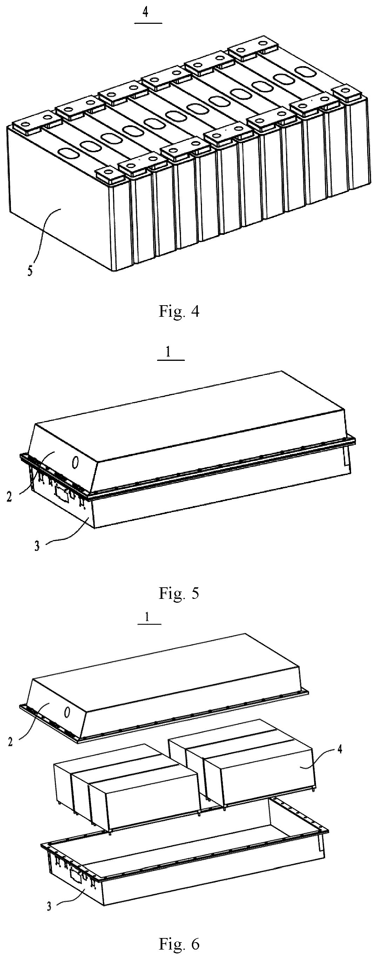

Fig. 4 is a schematic view of a battery module 4 as an example. As shown in Fig. 4, in the battery module 4, a plurality of secondary batteries 5 may be arranged in sequence along a length of the battery module 4. Alternatively, the secondary batteries may be arranged in any other manner. Further, the plurality of secondary batteries 5 may be fixed by fasteners.

Optionally, the battery module 4 may further include a housing having an accommodating space, and the plurality of secondary batteries 5 are accommodated in the accommodating space.

In some embodiments, the above-mentioned battery module may also be assembled into a battery pack, and the number of battery modules included in the battery pack may be adjusted according to the application and capacity of the battery pack.

Fig. 5 and Fig. 6 are schematic views of a battery pack 1 as an example. As shown in Fig. 5 and Fig. 6, the battery pack 1 may include a battery box and a plurality of battery modules 4 disposed in the battery case body. The battery box includes an upper case body 2 and a lower case body 3. The upper case body 2 is closed to the lower case body 3 to form a closed space for accommodating the battery modules 4. The plurality of battery modules 4 may be arranged in the battery box in any manner.

### Electrical device

A fourth aspect of the embodiments of the present application provides an electrical device. The electrical device includes at least one of the secondary battery, the battery module, or the battery pack of the present application. The secondary battery, the battery module, or the battery pack may be used as a power supply of the electrical device, or as an energy storage unit of the electrical device. The electrical device may be, but is not limited to, a mobile device (such as a mobile phone or a notebook computer), an electric vehicle (such as a full electric vehicle, a hybrid electric vehicle, a plug-in hybrid electric vehicle, an electric bicycle, an electric scooter, an electric golf cart, or an electric truck), an electric train, a ship, a satellite, an energy storage system, or the like.

The electrical device may include the secondary battery, the battery module, or the battery pack according to its usage requirements.

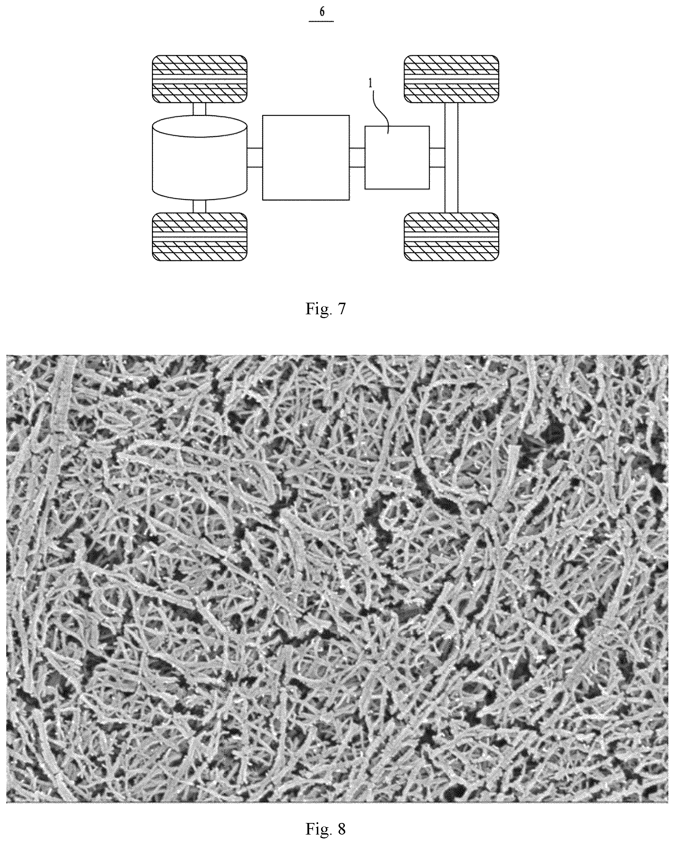

Fig. 7 is a schematic view of an electrical device as an example. The electrical device is a full electric vehicle, a hybrid electric vehicle, a plug-in hybrid electric vehicle, or the like. In order to meet the requirements of the electrical device for high power and high energy density, the battery pack or the battery module may be used.

As another example, the electrical device may be a mobile phone, a tablet computer, a notebook computer, or the like. The electrical device is generally required to be thin and light, so the secondary battery may be used as a power supply.

### Examples

The following examples more specifically describe the content disclosed in the present application, and these examples are only used for explanatory description, because various modifications and changes made within the scope of the content disclosed in the present application are apparent to those skilled in the art. Unless otherwise stated, all parts, percentages, and ratios described in the following examples are based on weight, all reagents used in the examples are commercially available or synthesized according to conventional methods and can be directly used without further treatment, and all instruments used in the examples are commercially available.

### Example 1 Preparation of a lithium-ion battery

### Preparation of a separator

(1) Inorganic particles tetragonal barium titanate BTO (with a particle size of 500 nm) and 1.6 million ultra-high molecular weight polyethylene were fully dispersed in a high mixing machine at a mass ratio of 15:85 to form a first group of mixed materials;
   1.6 million ultra-high molecular weight polyethylene, a nucleating agent such as terephthalic acid, and an antioxidant such as tris(2,4-di-tert-butylphenyl)phosphite were fully dispersed in the high mixing machine at a mass ratio of 99: 0.7: 0.3 to form a second group of mixed materials;
(2) The two groups of mixed materials obtained in step (1) were added to a pore-forming agent PVP separately, where the added PVP content accounted for 1% of each mixed material. After thorough stirring and uniform dispersion, the mixed materials were stood at room temperature for 24 hours to obtain a supporting mixed material and a functional mixed material;
(3) The supporting mixed material and the functional mixed material obtained in step (2) were melted, blended and plasticized by an eccentric rotor extruder at 200°C and transported into a three-layer co-extrusion die, where the supporting mixed material entered two outer sides and the functional mixed material entered the inner side. After flow casting and cooling, a three-layer composite gel film was formed;
(4) The three-layer composite gel film obtained in step (3) was stretched on a synchronous biaxial stretching machine at a stretching ratio of 5 × 5 and a stretching temperature of 118°C, and then heat setting was carried out at 130°C under a pressure of 10 MPa for 60 minutes;
(5) The biaxially stretched film obtained in step (4) was subjected to dichloromethane ultrasonic extraction, alcohol immersion, deionized water rinsing, and drying to obtain a separator.

### Preparation of a positive electrode plate

An aluminum foil with a thickness of 12 µm was used as a positive electrode current collector.

A positive electrode active material LiNi_{1/3}Co_{1/3}Mn_{1/3}O₂ (NCM333), a conductive agent carbon black (Super P), and a binder polyvinylidene fluoride (PVDF) were mixed uniformly in an appropriate amount of solvent N-methylpyrrolidone (NMP) at a mass ratio of 96.2: 2.7: 1.1 to obtain a positive electrode slurry; the positive electrode slurry was applied to a positive electrode current collector aluminum foil, and a positive electrode plate was obtained after drying, cold pressing, slitting, cutting, etc.

### Preparation of a negative electrode plate

A copper foil with a thickness of 8 µm was used as a negative electrolyte current collector.

Natural graphite as a negative electrode active material was mixed with a conductive agent Super P, a thickener CMC, and a binder butadiene styrene rubber (SBR) in deionized water uniformly to form a negative electrode slurry. The solid content of the negative electrode slurry was 30wt%, and a mass ratio of the graphite, Super P, CMC, and binder styrene butadiene rubber (SBR) in the solid composition was 80:15:3:2. The negative electrode slurry was applied to a current collector copper foil and dried at 85°C, followed by cold pressing, edge cutting, slicing, slitting, and drying at 120°C in vacuum for 12 hours, to obtain a negative electrode plate.

### Preparation of an electrolyte

In an environment with water content less than 10 ppm, non-aqueous organic solvents including ethylene carbonate EC and diethyl carbonate DMC were mixed in a volume ratio of 1:1 to obtain an electrolytic solution solvent. Subsequently, a lithium salt was mixed with the mixed solvent to prepare an electrolytic solution with a lithium salt concentration of 1 mol/L.

### Preparation of a secondary battery

The positive electrode plate, the separator, and the negative electrode plate were sequentially stacked and wound to obtain an electrode assembly; the electrode assembly was placed in an outer package and dried, the electrolyte was injected, and a lithium-ion battery was obtained after vacuum packaging, standing, chemical transformation, shaping, etc.

### Comparative Example 1

A lithium-ion battery was produced using a method similar to Example 1. Different from Example 1, the ferroelectric ceramic particles were replaced with silicon oxide SiO₂.

### Comparative Example 2

A lithium-ion battery was produced using a method similar to Example 1. Different from Example 1, the steps for producing the separator were as follows:
1.6 million ultra-high molecular weight polyethylene was used as a porous base material and cut into an appropriate size according to the sizes of the positive electrode plate and the negative electrode plate.

Inorganic particles tetragonal barium titanate BTO (with a particle size of 500 nm) and the 1.6 million ultra-high molecular weight polyethylene were mixed at a mass ratio of 15:85 and stirred under the action of a vacuum mixer until the system became a homogeneous barium titanate slurry, and the barium titanate slurry was applied to two surfaces of the porous base material, dried at 110°C, and solidified on the porous base material into a coating.

### Example 2

Lithium-ion batteries were produced using a method similar to Example 1. Different from Example 1, the materials of the ferroelectric ceramic particles were adjusted in Examples 2-1 to 2-3.

### Example 3

Lithium-ion batteries were produced using a method similar to Example 1. Different from Example 1, the particle size of the ferroelectric ceramic particles was adjusted in Examples 3-1 to 3-3.

### Example 4

Lithium-ion batteries were produced using a method similar to Example 1. Different from Example 1, the thickness of the separator was adjusted in Examples 4-1 to 4-4.

### Example 5

Lithium-ion batteries were produced using a method similar to Example 1. Different from Example 1, the thicknesses of the first region and the second region in the separator were adjusted in Examples 5-1 to 5-3.

### Example 6

Lithium-ion batteries were produced using a method similar to Example 1. Different from Example 1, the mass percentage of the ferroelectric ceramic particles in the separator was adjusted in Examples 6-1 to 6-3.

### Example 7

Lithium-ion batteries were produced using a method similar to Example 1. Different from Example 1, the porosity of the separator was adjusted in Examples 7-1 to 7-3.

### Example 8

A lithium-ion battery was produced using a method similar to Example 1. Different from Example 1, double-layer co-extrusion technology was used in Example 8, and the separator included one first region and one second region.

### Parameters of the examples and the comparative examples are shown in Tables 1 and 2.

### Test section

### 1. Test on puncture strength of the separator

According to the national standard GB/T 36363-2018 for polyolefin separators for lithium-ion batteries, the separator of a lithium-ion battery was flattened in a fixture and clamped, and punctured at a rate of (100+10) mm/min. Then, the sample was taken out and tested for thickness at 4 points around a pinhole according to the provisions of GB/T 6672-2001, an average value was taken, and the puncture strength was calculated.

### 2. Test on internal resistance of the separator

The testing was carried out with reference to the GB/T36363 2018 standard. Specific testing steps: 4 separators matching a testing mold were cut and put into an electrolyte of 1 mol/L lithium hexafluorophosphate, EC, EMC, and DEC in a volume ratio of 1: 1: 1 for soaking in a sealed manner for 2 hours, the electrolyte was injected into the resistance testing mold, 1 layer of separator was sequentially placed to test its alternating current impedance, then another layer of separator was placed to test its alternating current impedance until 4 layers were placed to obtain alternating current impedances R1, R2, R3, R4 respectively, and a chart was drawn with the number of separator layers as the horizontal axis and alternating current impedance as the vertical axis. When the linear fitting degree was greater than 99%, the slope was the internal resistance of the separator.

### 3. Test on discharge rate of the secondary battery

1) A button type battery was used for discharge rate testing. The positive electrode of the button type battery included lithium iron phosphate, where the ratio of lithium iron phosphate: conductive carbon black: PVDF binder was 8: 1: 1. The negative electrode was a lithium plate, the electrolyte was 1M LiFSI/DME, and the separator was the separator of the example and comparative examples.
2) Charge conditions: The battery was charged using a constant current-constant voltage mode (CC-CV mode) at room temperature. The battery was first charged with current at different rates (0.5/1/2C) in a constant current mode until the voltage rose to 3.65V, and then the battery was charged in a constant voltage mode with a cut-off current of 0.05C until being fully charged.
3) Discharge conditions: Discharge in the constant current mode at a discharge rate of 0.33C to 2.5V for 100 cycles.
4) Coulomb efficiencies at different charge rates after 100 cycles were calculated and recorded (discharge capacity/charge capacity * 100%).

### Test results

**Table 1**

| Item | Separator | | | | | | | | | |
|---|---|---|---|---|---|---|---|---|---|---|
| | Ferroelectric ceramic particles | | | | Thickness H (µm) | Two second regions 2H₁ (µm) | First region H₂ (µm) | H₁/2H₂ | Porosity (%) | Forming method |
| | Material | Dielectric constant ε | Dv50 (µm) | Mass percentage m₁% | | | | | | |
| Comparative Example 1 | Silicon oxide SiO₂ | 3.9 | 0.50 | 5% | 12 | 6.0 | 6.0 | 1.00 | 60 | Three-layer co-extrusion |
| Comparative Example 2 | Tetragonal BTO | 3640 | 0.50 | 5% | 12 | 6.0 | 6.0 | 1.00 | 60 | Coating forming |
| Example 1 | Tetragonal BTO | 3640 | 0.50 | 5% | 12 | 6.0 | 6.0 | 1.00 | 60 | Three-layer co-extrusion |
| Example 2-1 | Tungsten bronze structure material PbNb₂O₆ | 460 | 0.50 | 5% | 12 | 6.0 | 6.0 | 1.00 | 60 | Three-layer co-extrusion |
| Example 2-2 | Pyrochlore structure Cd₂Nb₂O₇ | 1780 | 0.50 | 5% | 12 | 6.0 | 6.0 | 1.00 | 60 | Three-layer co-extrusion |
| Example 2-3 | Layered bismuth oxide structure Bi₄Ti₃O₁₂ | 200 | 0.50 | 5% | 12 | 6.0 | 6.0 | 1.00 | 60 | Three-layer co-extrusion |
| Example 3-1 | Tetragonal BTO | 3640 | 0.05 | 5% | 12 | 6.0 | 6.0 | 1.00 | 60 | Three-layer co-extrusion |
| Example 3-2 | Tetragonal BTO | 3640 | 1.00 | 5% | 12 | 6.0 | 6.0 | 1.00 | 60 | Three-layer co-extrusion |
| Example 3-3 | Tetragonal BTO | 3640 | 5.00 | 5% | 12 | 6.0 | 6.0 | 1.00 | 60 | Three-layer co-extrusion |
| Example 4-1 | Tetragonal BTO | 3640 | 0.50 | 5% | 10 | 5.0 | 5.0 | 1.00 | 60 | Three-layer co-extrusion |
| Example 4-2 | Tetragonal BTO | 3640 | 0.50 | 5% | 15 | 5.0 | 10.0 | 2.00 | 60 | Three-layer co-extrusion |
| Example 4-3 | Tetragonal BTO | 3640 | 0.50 | 5% | 5 | 1.5 | 3.5 | 2.33 | 60 | Three-layer co-extrusion |
| Example 4-4 | Tetragonal BTO | 3640 | 0.50 | 5% | 25 | 7.0 | 18.0 | 2.58 | 60 | Three-layer co-extrusion |
| Example 5-1 | Tetragonal BTO | 3640 | 0.50 | 5% | 12 | 6.5 | 5.5 | 0.85 | 60 | Three-layer co-extrusion |
| Example 5-2 | Tetragonal BTO | 3640 | 0.50 | 5% | 12 | 5.5 | 6.5 | 1.18 | 60 | Three-layer co-extrusion |
| Example 5-3 | Tetragonal BTO | 3640 | 0.50 | 5% | 12 | 8.0 | 4.0 | 0.50 | 60 | Three-layer co-extrusion |
| Example 6-1 | Tetragonal BTO | 3640 | 0.50 | 1% | 12 | 6.0 | 6.0 | 1.00 | 60 | Three-layer co-extrusion |
| Example 6-2 | Tetragonal BTO | 3640 | 0.50 | 15% | 12 | 6.0 | 6.0 | 1.00 | 60 | Three-layer co-extrusion |
| Example 6-3 | Tetragonal BTO | 3640 | 0.50 | 20% | 12 | 6.0 | 6.0 | 1.00 | 60 | Three-layer co-extrusion |
| Example 7-1 | Tetragonal BTO | 3640 | 0.50 | 5% | 12 | 6.0 | 6.0 | 1.00 | 40 | Three-layer co-extrusion |
| Example 7-2 | Tetragonal BTO | 3640 | 0.50 | 5% | 12 | 6.0 | 6.0 | 1.00 | 50 | Three-layer co-extrusion |
| Example 7-3 | Tetragonal BTO | 3640 | 0.50 | 5% | 12 | 6.0 | 6.0 | 1.00 | 70 | Three-layer co-extrusion |
| Example 8 | Tetragonal BTO | 3640 | 0.50 | 15% | 9 | 3.0 (Single second region) | 6.0 | 1 | 60 | Double-layer co-extrusion |

**Table 2**

| Test item | Separator | | | | | | | Rate performance of secondary battery | | |
|---|---|---|---|---|---|---|---|---|---|---|
| | Puncture strength/ gf | Tensile strength (TD) /kgf·µm⁻¹ | Tensile strength (MD) /kgf·µm⁻¹ | 105°C thermal shrinkage (TD) /% | 105°C thermal shrinkage (MD) /% | Internal resistance (25°C)/Ω· cm² | Air permeability/ s·100mL⁻¹ | Coulomb efficiency/% | | |
| | | | | | | | | 0.5C | 1C | 2C |
| Comparative Example 1 | 325.04 | 1204.14 | 1236.82 | 0.63 | 0.72 | 0.3437 | 102.7 | 99.94 | 98.82 | 98.24 |
| Comparative Example 2 | 329.25 | 1045.62 | 1216.23 | 0.62 | 0.66 | 0.3392 | 118.2 | 99.92 | 98.67 | 97.87 |
| Example 1 | 330.73 | 1174.50 | 1341.75 | 0.53 | 0.64 | 0.3325 | 101.6 | 99.96 | 99.54 | 99.42 |
| Example 2-1 | 327.28 | 1120.26 | 1259.40 | 0.77 | 0.58 | 0.3246 | 124.7 | 99.94 | 99.25 | 99.15 |
| Example 2-2 | 325.35 | 1150.75 | 1226.00 | 0.92 | 0.38 | 0.3532 | 139.0 | 99.95 | 99.32 | 99.58 |
| Example 2-3 | 348.88 | 1284.63 | 1380.11 | 0.46 | 0.49 | 0.3337 | 155.2 | 99.93 | 99.35 | 98.91 |
| Example 3-1 | 328.24 | 1084.25 | 1110.62 | 0.86 | 0.68 | 0.3452 | 145.2 | 99.92 | 99.11 | 98.92 |
| Example 3-2 | 334.15 | 1324.12 | 1110.11 | 0.98 | 0.88 | 0.3616 | 135.4 | 99.92 | 99.13 | 98.92 |
| Example 3-3 | 348.14 | 1384.33 | 1331.38 | 1.29 | 1.32 | 0.3857 | 101.3 | 99.90 | 99.11 | 98.88 |
| Example 4-1 | 328.34 | 1164.56 | 1344.16 | 0.56 | 0.68 | 0.3317 | 99.2 | 99.96 | 99.35 | 98.80 |
| Example 4-2 | 339.71 | 1177.50 | 1421.45 | 0.58 | 0.72 | 0.3449 | 114.6 | 99.94 | 99.20 | 98.46 |
| Example 4-3 | 287.78 | 1012.10 | 1033.91 | 1.18 | 1.73 | 0.3134 | 89.9 | 99.80 | 98.35 | 98.16 |
| Example 4-4 | 367.35 | 1418.23 | 1403.02 | 0.48 | 0.84 | 0.3831 | 159.4 | 99.78 | 98.41 | 98.18 |
| Example 5-1 | 354.16 | 1421.47 | 1376.24 | 0.45 | 0.47 | 0.3642 | 130.6 | 99.91 | 99.12 | 99.15 |
| Example 5-2 | 330.72 | 1146.48 | 1289.72 | 0.58 | 0.66 | 0.3291 | 103.7 | 99.95 | 99.47 | 99.31 |
| Example 5-3 | 359.34 | 1435.71 | 1381.61. | 0.44 | 0.46 | 0.3589 | 131.0 | 99.90 | 98.92 | 98.01 |
| Example 6-1 | 321.35 | 1141.68 | 1314.69 | 0.56 | 0.58 | 0.3285 | 117.6 | 99.90 | 99.34 | 99.28 |
| Example 6-2 | 327.28 | 1120.26 | 1259.40 | 0.77 | 0.58 | 0.3246 | 124.7 | 99.94 | 99.30 | 99.19 |
| Example 6-3 | 330.17 | 1145.37 | 1307.15 | 0.81 | 0.67 | 0.3315 | 130.1 | 99.83 | 99.12 | 98.71 |
| Example 7-1 | 329.22 | 1113.63 | 1352.16 | 0.78 | 0.57 | 0.4012 | 169.4 | 99.82 | 98.27 | 97.89 |
| Example 7-2 | 312.44 | 1104.29 | 1284.65 | 0.86 | 0.87 | 0.3416 | 115.6 | 99.92 | 98.69 | 98.25 |
| Example 7-3 | 301.58 | 1078.52 | 1179.57 | 0.98 | 1.29 | 0.3201 | 91.8 | 99.94 | 98.78 | 98.56 |
| Example 8 | 280.76 | 1098.21 | 1102.34 | 0.88 | 1.02 | 0.3106 | 98.1 | 99.96 | 98.92 | 98.61 |

With respect to the separator in Comparative Example 1, the silicon oxide SiO₂ filler was added by three-layer co-extrusion, which can improve the heat resistance and mechanical properties of the separator and reduce the risk of puncture of the separator by lithium dendrites; but a large quantity of lithium dendrites was generated, resulting in poor rate performance of the lithium-ion battery.

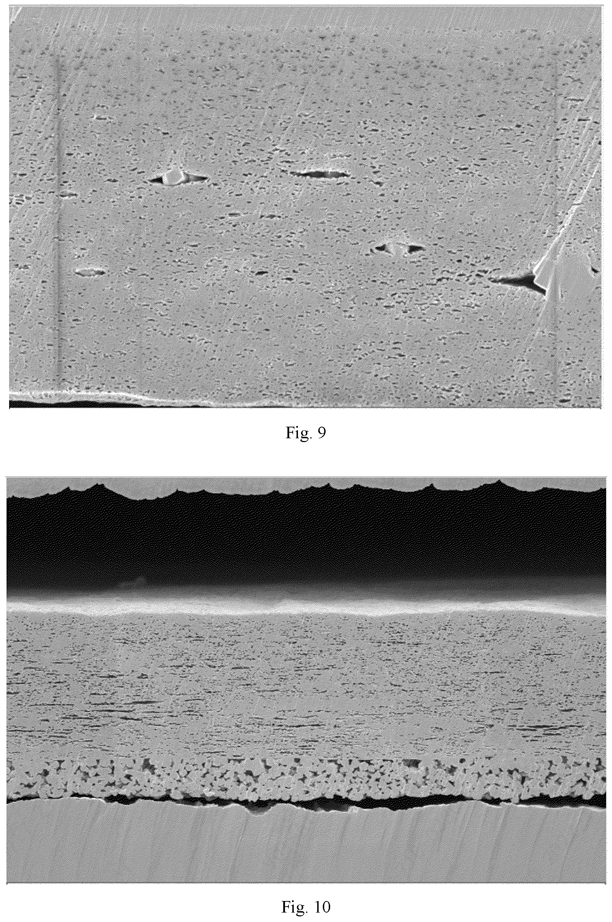

In the examples of the present application, tetragonal barium titanate BTO was added to the middle portion of the separator by three-layer co-extrusion, which can reduce the occurrence of side reactions caused by the contact between the tetragonal barium titanate BTO and the electrolyte, reduce the risk of precipitation of active ions into dendrites, and improve the rate performance of the lithium-ion batteries. As shown in Fig. 8 and Fig. 9, the middle portion of the separator in Example 1 was filled with the tetragonal barium titanate BTO. Apparently, the tetragonal barium titanate BTO can also be added to the separator by double-layer co-extrusion in the examples of the present application, to improve the rate performance of the lithium-ion batteries.

The tetragonal barium titanate BTO was applied to the porous base material of the separator by coating in Comparative Example 2; although the tetragonal barium titanate BTO can generate a reverse electric field to improve the growth of dendrites, the direct contact between the tetragonal barium titanate BTO and the electrolyte may lead to side reactions between them, so that the adjusting effect of the tetragonal barium titanate BTO was reduced, which was not conducive to the rate performance of the lithium-ion battery. As shown in Fig. 10, in the layer structure of the separator of Comparative Example 2, the boundaries between adjacent layers are clear and there is a certain gap, which poses a risk of layer detachment. The connection between layers in the separator of Example 1 was tighter, with stronger bonding force, and the tetragonal barium titanate BTO was uniformly dispersed in the separator, which was conducive to the uniform function of tetragonal barium titanate BTO.

Examples 2-1 to 2-3 had excellent effects of reducing dendrite formation by adjusting the materials of the ferroelectric ceramic particles. When the particle size of the ferroelectric ceramic particles in Examples 3-1 to 3-3 was 0.05 to 5.00, it can improve the air permeability of the separator, increase the transport rate of lithium ions, and improve the performance of the lithium-ion batteries. By adjusting the thicknesses of the separator, the first region, and the second region in Examples 4-1 to 4-4 and Examples 5-1 to 5-3, the distribution form of the ferroelectric ceramic particles can be adjusted, thereby adjusting the magnitude of the ferroelectric effect exerted by the ferroelectric ceramic particles. By adjusting the mass percentage of the ferroelectric ceramic particles in the separator in Examples 6-1 to 6-3, the magnitude of the ferroelectric effect exerted by the ferroelectric ceramic particles can be adjusted. By adjusting the porosity in Examples 7-1 to 7-3, the air permeability of the separator can be improved, thereby increasing the transport rate of lithium ions and improving the performance of the lithium-ion batteries.

Although the present application is described with reference to the preferred embodiments, various improvements can be made and equivalents can be substituted for components therein without departing from the scope of the present application. In particular, as long as there is no structural conflict, various technical features mentioned in the embodiments can be combined in any way. The present application is not limited to the specific embodiments disclosed herein, but includes all technical solutions falling within the scope of the claims.

## Claims

1. A separator, comprising a porous base material and ferroelectric ceramic particles, wherein the porous base material comprises a first region and a second region disposed in a thickness direction of the separator, and the ferroelectric ceramic particles are dispersed in the first region.

2. The separator according to claim 1, wherein the ferroelectric ceramic particles have a dielectric constant ε, and the ferroelectric ceramic particles satisfy: 200 ≤ ε ≤ 3640.

3. The separator according to claim 1 or 2, wherein the ferroelectric ceramic particles comprise one or more of perovskite structure compounds, tungsten bronze structure compounds, pyrochlore structure compounds, and layered bismuth oxide structure compounds;
optionally,
the perovskite structure compounds comprise one or more of titanates, ferrites, and niobates;
further optionally, the titanates comprise one or more of barium titanate BaTiO₃, lead titanate PbTiO₃, and strontium titanate SrTiO₃; the ferrites comprise one or more of bismuth ferrite BiFeO₃, lanthanum ferrite LaFeO₃, and strontium ferrite SrFeO₃;
optionally,
the tungsten bronze structure compounds comprise one or more of lead niobate PbNb₂O₆, barium sodium niobate Ba₂NaNb₅O₁₅, strontium barium niobate Sr₁₋ₓBaₓNb₂O₆, bismuth lead niobate PbBiNb₅O₁₅, and titanium lead niobate Pb₃TiNb₄O₁₅, wherein 0 < x < 1;
optionally,
the pyrochlore structure compounds comprise one or more of cadmium pyrotantalate Cd₂Ta₂O₇, lead pyroniobate Pb₂Nb₂O₇, cadmium pyroniobate Cd₂Nb₂O₇, gadolinium pyroniobate Gd₂Nb₂O₇, and bismuth ruthenate Bi₂Ru₂O₇;
optionally,
the layered bismuth oxide structure compounds comprise one or more of bismuth titanate Bi₄Ti₃O₁₂, lead bismuth niobate PbBi₂Nb₂O₉, titanium bismuth niobate Bi₃TiNbO₉, and bismuth strontium titanate SrBi₄Ti₄O₁₅.

4. The separator according to any one of claims 1 to 3, wherein the ferroelectric ceramic particles have a volume distribution particle size Dv50 of D in µm, and the ferroelectric ceramic particles satisfy: 0.05 ≤ D ≤ 5.00; optionally, 0.05 ≤ D ≤ 1.00.

5. The separator according to any one of claims 1 to 4, wherein the porous base material comprises one or more of polyolefin polymers, polyamides, polyesters, polysulfones, and polyether sulfones; and
optionally, the polyolefin polymers comprise one or more of polyethylene, polyvinylidene fluoride, polytetrafluoroethylene, polyvinyl chloride, polypropylene, and poly(1-butylene).

6. The separator according to any one of claims 1 to 5, wherein the porous base material comprises a polymer with a number average molecular weight of 5×10⁴ to 5×10⁶, optionally 1×10⁵ to 1×10⁶.

7. The separator according to any one of claims 1 to 6, wherein
the second region has a thickness of H₁ in µm;
the first region has a thickness of H₂ in µm;
the separator satisfies: 0.8 ≤ H₂/2H₁ ≤ 3; optionally, 0.8 ≤ H₂/2H₁ ≤ 2; and
optionally, 2.5 ≤ H₁ ≤ 4.5; and/or 3.5 ≤ H₂ ≤ 7.5.

8. The separator according to any one of claims 1 to 7, wherein the separator has a thickness of H in µm, and the separator satisfies: 5 ≤ H ≤ 25; optionally, 10 ≤ H ≤ 15.

9. The separator according to any one of claims 1 to 8, wherein
the separator has a porosity of P%, 50 ≤ P ≤ 70; and/or
the separator has an air permeability of MAP in s/100mL, 80 ≤ MAP ≤ 200.

10. The separator according to any one of claims 1 to 9, wherein based on a total mass of the separator, a mass percentage of the ferroelectric ceramic particles is m₁%, 1 ≤ m₁ ≤ 15; and/or
based on the total mass of the separator, a mass percentage of the porous base material is m₂%, 85 ≤ m₂ ≤ 99.

11. The separator according to any one of claims 1 to 10, wherein the porous base material comprises the second regions in a number of 2, and the first region is located between the second regions.

12. A method for preparing a separator, comprising:
providing a supporting mixed material comprising a first polymer;
mixing a second polymer and ferroelectric ceramic particles as a functional mixed material;
thermally treating the supporting mixed material to melt the first polymer and form a supporting melt;
thermally treating the functional mixed material to melt the second polymer and form a functional melt; and
disposing the supporting melt on at least one side of the functional melt, co-extruding the supporting melt and the functional melt, and then stretching and solidifying to form the separator.

13. A secondary battery, comprising the separator according to any one of claims 1 to 11 or the separator prepared by the method according to claim 12.

14. An electrical device, comprising the secondary battery according to claim 13.
